# EUROPEAN PATENT SPECIFICATION

(11) **EP 3 483 980 B1**
(45) Date of publication and mention of the grant of the patent: **04.06.2025**
(21) Application number: 18772425.7
(22) Date of filing: 21.02.2018
(51) Int. Cl.: H01M 50/553, H01M 10/48, H01M 50/105, H01M 50/548, H01M 50/119, H01M 50/121, H01M 50/129, H01M 50/534

(54) **BATTERY MODULE HAVING SIMPLE SENSING STRUCTURE**
BATTERIEMODUL MIT EINFACHER SENSORSTRUKTUR
MODULE DE BATTERIE AYANT UNE STRUCTURE DE DÉTECTION SIMPLE

(30) Priority: 21.03.2017 KR 20170035400
(43) Date of publication of application: 15.05.2019
(73) Proprietor: LG Energy Solution, Ltd., Seoul 07335 (KR)
(72) Inventor: JIN, Hee-Jun, Daejeon 34122 (KR); SEO, Sung-Won, Daejeon 34122 (KR); LEE, Yoon-Koo, Daejeon 34122 (KR); MUN, Jeong-O, Daejeon 34122 (KR); JU, Eun-Ah, Daejeon 34122 (KR)
(74) Representative: Hoffmann Eitle
(86) International application number: PCT/KR2018/002145
(87) International publication number: WO 2018/174417

(56) References cited:
- JP-A- 2004 031 270
- JP-A- H1 131 486
- KR-A- 20130 113 736
- KR-A- 20140 013 132
- KR-A- 20140 083 344
- KR-A- 20160 054 268
- KR-A- 20170 027 543
- US-A- 5 948 562
- US-A1- 2004 076 877

## Description

### TECHNICAL FIELD

The present disclosure relates to a battery cell and a battery module comprising the same and having a simple sensing structure, and more particularly, to a battery cell and a battery module comprising the same and capable of minimizing a length of a sensing line in a pouch-type battery cell at which electrode leads are drawn in both directions.

### BACKGROUND ART

In a pouch-type battery cell, if a positive electrode tab and a negative electrode tab are drawn in different directions and thus a positive electrode lead connected to the positive electrode tab and a negative electrode lead connected to the negative electrode tab are also drawn in different directions, a sensing line for sensing a voltage of the battery cell is inevitably elongated very long.

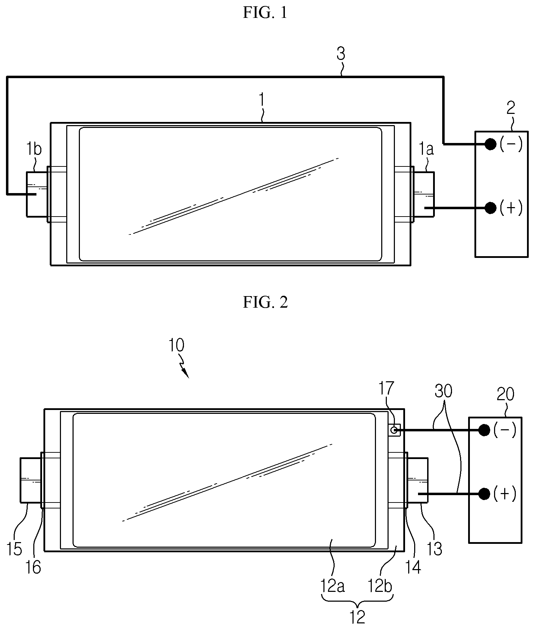

Referring to FIG. 1, a pouch-type battery cell 1 in which a pair of electrode leads 1a, 1b are drawn in opposite directions is depicted.

For sensing a voltage of the battery cell 1, the positive electrode lead 1a and the negative electrode lead 1b located at opposite sides should be connected to a voltage sensor 2 by using a sensing wire 3, respectively. Thus, in the bi-directional drawing-type battery cell, the sensing wire 3 inevitably has a very long length.

If the sensing wire 3 has a long length, the complicated sensing structure causes space limitation in the module, and also the sensing wire 3 is more likely to be damaged due to interference with other components.

JP 2004 031 270 A relates to a double-tabbed cell and battery pack. Positive foil and negative foil coated respectively with active materials and over both surfaces are stacked to a plurality of layers via separators, and the stack is sealed in a packaging material as immersed in an electrolyte. The positive foil and negative foil of each layer are joined respectively to the positive tab and negative tab, and the positive tab and the negative tab are projected from the packaging material. Along the positive and negative tabs and, detecting terminals are disposed for detection of the output voltage between the positive tab and the negative tab, respectively.

JP H11 31486 A refers to a flat battery. A battery has an electrochemical reaction element, outer members to store the electrochemical reaction element and an electric terminal to output electric energy generated from the electrochemical reaction element or electrical information to the outside of the outer members. In this case, at least parts of the outer members are formed as the sealed parts of a film structure and an electric terminal is provided in the sealed part to be planely exposed to the outside of the outer members in the perpendicular direction to the sealed face.

US 5,948,562 A relates to an energy storage device. A metal foil laminate package for an electrochemical cell has a multilayered structure comprising a metal foil sandwiched between layers of a thermoplastic and a heat-sealable polymer. An electrically conducting tab extends from the cell and has a layer of insulative tape disposed on both sides of the tab. Apertures formed through the various layers of the package expose both sides of the tab, providing sites for subsequent welding of the tab to external circuitry.

US 2004/076877 A1 refers to a connection between a conductive substrate and laminate.

### DISCLOSURE

### Technical Problem

The present disclosure is designed to solve the problems of the related art, and therefore the present disclosure is directed to providing a structure in which a sensing wire is capable of being installed at only one side of a battery cell to minimize a length of the installed sensing wire and also minimize the possibility of short circuit between a sensing lead for connecting the sensing wire and an electrode lead adjacent thereto.

However, the technical problem to be solved by the present disclosure is not limited to the above, and other objects not mentioned herein will be understood from the following description by those skilled in the art.

### Technical Solution

According to the present invention, there is provided a battery cell as defined in claim 1. The battery cell comprises: an electrode assembly having a pair of electrode tabs; a pair of electrode leads connected to the electrode tabs; and a pouch case configured to accommodate the electrode assembly. The pouch case is sealed in a state where the electrode leads are exposed to the outside of the pouch case, wherein the pouch case comprises an accommodation portion for accommodating the electrode assembly and a sealing portion extending in a circumferential direction of the accommodation portion. The battery cell is a bidirectional drawing-type battery cell in which the pair of electrode leads are drawn in opposite directions, wherein the battery cell includes a sensing lead connected to one of the electrode tabs, wherein the sensing lead is located at the sealing portion at one side or the other side of the battery cell. The sensing lead extends in parallel to any one of the pair of electrode leads adjacent thereto, wherein the sensing lead is located to be adjacent to any one of the pair of electrode leads having opposite polarity than the sensing lead, and wherein the sensing lead does not extend to the outside of the pouch case but is located at the inside thereof, and is exposed to the outside through a sensing hole formed in the sealing portion of the pouch case, wherein the sensing hole is formed in at least one of upper and lower surfaces of the pouch case.

There is also provided a battery module as defined in claim 4. The battery module comprises: the pouch-type battery cell according to the above; a voltage sensor configured to sense a voltage of the battery cell; and a sensing wire configured to connect the battery cell and the voltage sensor.

The sensing wire may connect the sensing lead to the voltage sensor and also connect the electrode lead adjacent to the sensing lead to the voltage sensor.

The sensing hole may be formed in an upper or lower surface of the pouch case.

The sensing wire may be connected to the sensing lead by a solder.

The sensing hole may be formed in both of upper and lower surfaces of the pouch case.

A receptacle may be connected to an end of the sensing wire, and the receptacle may be in contact with and elastically presses both surfaces of the sensing lead.

### Advantageous Effects

According to an embodiment of the present disclosure, since the sensing wire is capable of being installed only at one side of the battery cell, the length of the installed sensing wire may be minimized.

According to another embodiment of the present disclosure, the possibility of short circuit between a sensing lead for connecting the sensing wire and an electrode lead adjacent thereto sensing wire may be minimized.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram showing a conventional sensing structure.
FIG. 2 is a plane view showing a battery module according to an embodiment of the present disclosure.
FIG. 3 is a plane view showing a battery cell employed at the present disclosure.
FIG. 4 is an enlarged view showing a portion A of FIG. 3.
FIG. 5 is a diagram showing an example of the battery cell employed at the present disclosure and is a cross-sectioned view, taken along the line X-X' of FIG. 3.
FIG. 6 is a diagram showing that a sensing wire is connected to the battery cell depicted in FIG. 5.
FIG. 7 is a diagram showing an embodiment in which a gasket is applied to the battery cell depicted in FIG. 5.
FIG. 8 is a diagram showing another example of the battery cell employed at the present disclosure and is a cross-sectioned view, taken along the line X-X' of FIG. 3.
FIG. 9 is a diagram showing that a sensing wire is connected to the battery cell depicted in FIG. 8.
FIG. 10 is a diagram showing an embodiment in which a gasket is applied to the battery cell depicted in FIG. 8.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is for the purpose of illustrations only, not intended to limit the scope of the disclosure, so it should be understood that other equivalents and modifications could be made thereto within the scope of the appended claims.

The overall configuration of a battery module according to an embodiment of the present disclosure will be described with reference to FIG. 2.

FIG. 2 is a plane view showing a battery module according to an embodiment of the present disclosure.

Referring to FIG. 2, a battery module according to an embodiment of the present disclosure includes a pouch-type battery cell 10, a voltage sensor 20 for sensing a voltage of the battery cell 10, and a sensing wire 30 for electrically connecting a positive electrode and a negative electrode of the battery cell 10 to the voltage sensor 20.

The battery cell 10 employed at the present disclosure is a pouch-type battery cell and includes an electrode assembly 11, a pouch case 12, a pair of electrode leads 13, 15, a pair of sealants 14, 16 and a sensing lead 17.

The electrode assembly 11 is configured so that a positive electrode plate, a separator and a negative electrode plate are stacked at least once, and the separator is preferably located at both outer sides for insulation.

Though not shown in the figures, the positive electrode plate includes a positive electrode current collector and a positive electrode active material layer coated on at least one surface thereof, and a positive electrode uncoated region not coated with the positive electrode active material layer is formed at one end thereof. The positive electrode uncoated region serves as a positive electrode tab 11a connected to the positive electrode lead 13.

Similarly, the negative electrode plate includes a negative electrode current collector and a negative electrode active material layer coated on at least one surface thereof, and an uncoated region not coated with the active material layer is formed at one end thereof. The uncoated region serves as a negative electrode tab 11a connected to the negative electrode lead 15.

In this specification, for example, the electrode lead 13 located at the right in FIG. 2 is called a positive electrode lead, and the electrode lead 15 located at the left is called a negative electrode lead. However, the present disclosure is not limited thereto, and the polarities may be formed on the contrary.

Meanwhile, when being stacked, the positive electrode plate and the negative electrode plate are disposed so that the electrode tabs 11a having different polarities, namely the positive electrode tab and the negative electrode tab, are oriented to opposite sides.

In addition, the separator is interposed between the positive electrode plate and the negative electrode plate to prevent the electrode plates having different polarities from directly contacting, and is made of a porous material to allow ion passage.

The electrode leads 13, 15 are classified into a positive electrode lead 13 connected to the positive electrode tab and a negative electrode lead 15 connected to the negative electrode tab. Since the positive electrode tab and the negative electrode tab are oriented oppositely as described above, the positive electrode lead 13 and the negative electrode lead 15 also extend in opposite directions accordingly.

Meanwhile, the electrode leads 13, 15 are generally made of an aluminum material coated with nickel, and such metallic electrode leads 13, 15 are not easily adhered to an inner surface of the pouch case 12 when the pouch case 12 is sealed.

Thus, in the sealing region of the pouch case 12, a portion where the electrode leads 13, 15 are drawn may have weak sealing. For this reason, in order to improve the sealing property, sealants 14, 16 made of a resin material with good adhesion to the inner surface of the pouch case 12 may be attached to the periphery of the electrode leads 13, 15.

The pouch case 12 may be composed of an upper case and a lower case, and the upper case and the lower case may be respectively made of a multilayered porous film composed of a first resin layer, a metal layer and a second resin layer.

In this case, the first resin layer forming an innermost surface of the pouch film may be made of a resin with a thermal bonding property so that the upper case and the lower case may be easily fused to each other when heat is applied thereto in a state where the upper case and the lower case are in contact.

The pouch case 12 may be classified into two portions, namely an accommodation portion 12a for accommodating the electrode assembly 11 and a sealing portion 12b extending in a circumferential direction of the accommodation portion 12a so that the electrode leads 13, 15 drawn to the outside is thermally fused thereto to seal the pouch case 12.

As described above, in the sealing portion 12b, a region where the electrode leads 13, 15 pass may have weak sealing, and thus the sealants 14, 16 are applied to the corresponding region.

In other words, the sealants 14, 16 are interposed between the inner surfaces of the upper pouch case and the lower pouch case in a state of being attached to the peripheries of the electrode leads 13, 15.

Meanwhile, the battery cell 10 employed at the present disclosure further includes a sensing lead 17 for voltage sensing, in addition to the pair of electrode leads 13, 15. The sensing lead 17 may have positive polarity or negative polarity.

In other words, the sensing lead 17 is located to be adjacent to any one of the positive electrode lead 13 and the negative electrode lead 15. Here, if the sensing lead 17 is located on the sealing portion 12b provided in a side where the positive electrode lead 13 is drawn as shown in FIG. 2, the sensing lead 17 has negative polarity, and if the sensing lead 17 is located in a side where the negative electrode lead 15 contrary to FIG. 2, the sensing lead 17 has positive polarity.

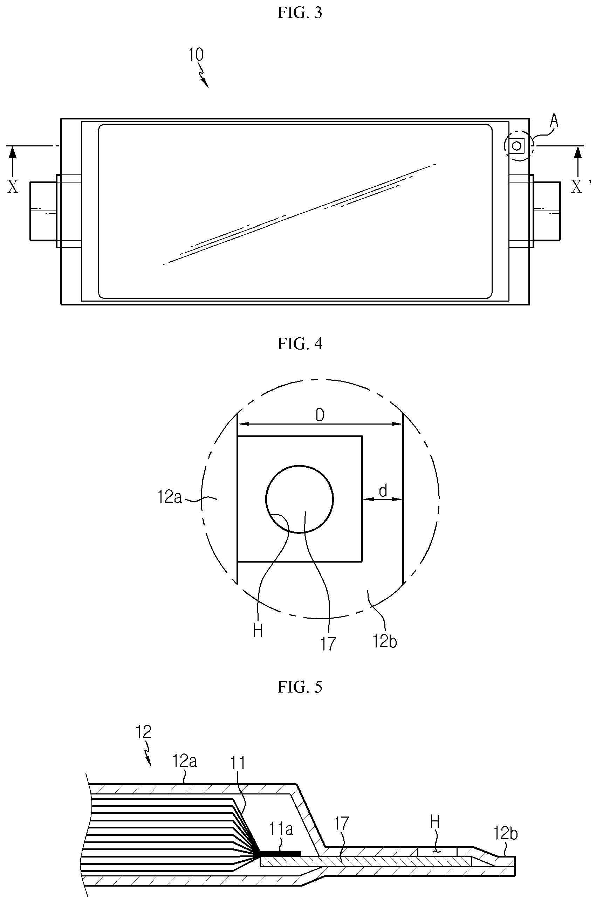

Next, the sensing lead 17 will be described in more detail with reference to FIGS. 3 to 5.

FIG. 3 is a plane view showing a battery cell employed at the present disclosure, and FIG. 4 is an enlarged view showing a portion A of FIG. 3. Also, FIG. 5 is a diagram showing an example of the battery cell employed at the present disclosure and is a cross-sectioned view, taken along the line X-X' of FIG. 3.

Referring to FIGS. 3 to 5, the sensing lead 17 is a component located at the sealing portion 12b at one side or the other side of the battery cell 10. The sensing lead 17 is bonded to the electrode tab 11a of the electrode assembly 11 and extends in parallel to the positive electrode lead 13 or the negative electrode lead 15 adjacent thereto. However, the sensing lead 17 does not extend to the outside of the pouch case 12 but is located at the inside thereof, and is exposed to the outside through a sensing hole H formed in a part of the sealing portion 12b of the pouch case 12.

Meanwhile, as shown in FIG. 4, in the sealing portion 12b, a region where the sensing lead 17 is located is not sealed. In other words, compared to the entire width D of the sealing portion 12b, a sealing width D of the region where the sensing lead 17 is located is smaller. Here, in order to prevent the sealing property from deteriorating due to the smaller width, the sealing width D of the region where the sensing lead 17 is located is preferably 1/4 or above of the entire width of the sealing portion 12b.

Next, a method for connecting a sensing wire to the battery cell according to an embodiment of the present disclosure will be described with reference to FIGS. 5 to 7.

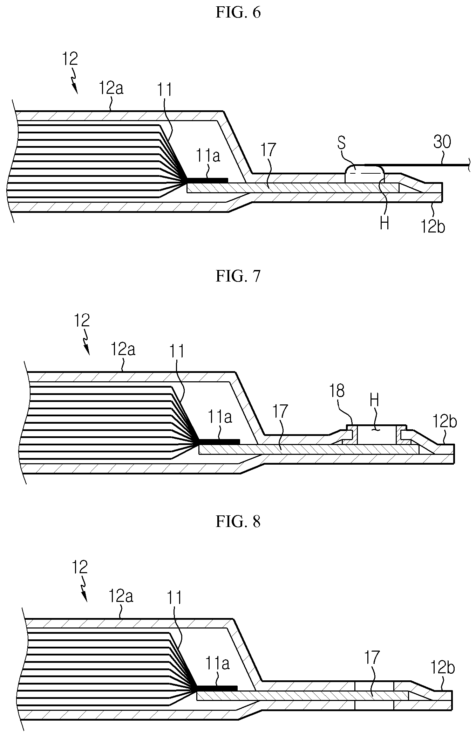

FIG. 6 is a diagram showing that a sensing wire is connected to the battery cell depicted in FIG. 5.

FIG. 7 is a diagram showing an embodiment in which a gasket is applied to the battery cell depicted in FIG. 5.

First, referring to FIGS. 5 and 6, if the sensing hole H is formed only in any one surface of the sealing portion 12b, the sensing wire 30 may be bonded to the sensing lead 17 by using a solder S.

Even though the figures of the present disclosure depict only a case where the sensing hole H is formed in the upper surface of the pouch case 12, the present disclosure is not limited thereto, and the sensing hole H may be formed in the lower surface thereof, instead of the upper surface, if necessary.

Next, referring to FIG. 7, the battery cell 10 employed at the present disclosure may further include a gasket 18 for preventing the sealing property of the pouch case 12 from deteriorating due to the sensing hole H.

The gasket 18 is inserted into an edge of the sensing hole H and is interposed between the sensing lead 17 and the inner surface of the pouch case 12 to seal a region where the sensing hole H is formed.

In addition, the gasket 18 covers the inner wall of the sensing hole H to prevent the metal layer from being exposed to the outside through the inner wall of the sensing hole H, namely a cut surface for forming the sensing hole H, thereby preventing the occurrence of short circuit by the metal layer.

Next, another example of the battery cell employed at the present disclosure and a method for connecting a sensing wire and a sensing lead will be described with reference to FIGS. 8 to 10.

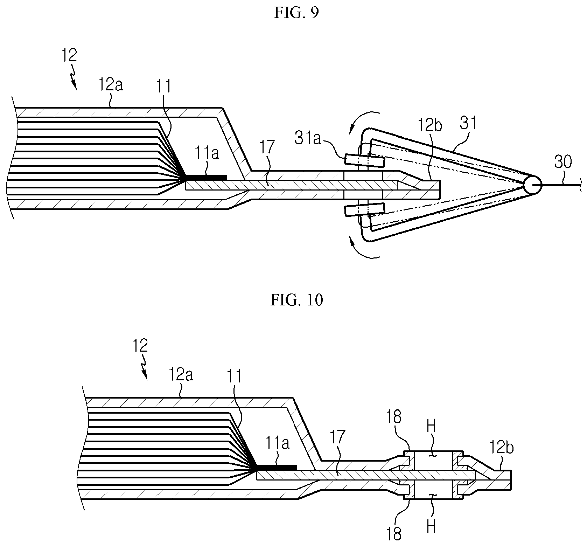

FIG. 8 is a diagram showing another example of the battery cell employed at the present disclosure and is a cross-sectioned view, taken along the line X-X' of FIG. 3, and FIG. 9 is a diagram showing that a sensing wire is connected to the battery cell depicted in FIG. 8. Also, FIG. 10 is a diagram showing an embodiment in which a gasket is applied to the battery cell depicted in FIG. 8.

First, referring to FIG. 8, the battery cell 10 employed at the present disclosure may have the sensing hole H in both of the upper and lower surfaces of the pouch case 12, different from FIG. 5.

Referring to FIG. 9, if the sensing hole H is formed in both of the upper and lower surfaces of the pouch case 12 as described above, the sensing wire 20 and the sensing lead 17 may be electrically connected by using a receptacle 31.

The receptacle 31 is connected to one end of the sensing wire 30, and a pair of contact portions 31a formed at the end elastically press both surfaces of the sensing lead 17 so that the battery cell 10 and the voltage sensor 20 may be electrically connected in a stable and convenient way. In this case, in order to minimize electric resistance and maximize the coupling force, the contact portion 31a may be shaped and sized to correspond to the sensing hole H.

Meanwhile, referring to FIG. 10, the sensing holes H formed in both surfaces of the pouch case 12 may be sealed by the gasket 18, similar to the embodiment depicted in FIG. 7.

As described above, since the battery module according to an embodiment of the present disclosure includes the sensing lead 17 exposed to the outside through the sealing portion 12b, it is not needed to respectively connect the sensing wire 30 to the electrode leads 13, 15 drawn in opposite directions.

In other words, the battery module according to an embodiment of the present disclosure is configured such that the battery cell 10 and the voltage sensor 20 are electrically connected through the sensing lead 17 and one electrode lead located adjacent to one side of the battery cell 17, and thus has a structural advantage in that the extending length of the sensing wire 30 may be shortened.

The present disclosure has been described in detail. However, it should be understood that the detailed description and specific examples, while indicating preferred embodiments of the disclosure, are given by way of illustration only, since various changes and modifications within the scope of the appended claims will become apparent to those skilled in the art from this detailed description.

## Claims

1. A battery cell (10), comprising:
an electrode assembly (11) having a pair of electrode tabs (11a);
a pair of electrode leads (13, 15) connected to the electrode tabs (11a); and
a pouch case (12) configured to accommodate the electrode assembly (11),
wherein the pouch case (12) is sealed in a state where the electrode leads (13, 15) are exposed to the outside of the pouch case (12),
wherein the pouch case (12) comprises an accommodation portion (12a) for accommodating the electrode assembly (11) and a sealing portion (12) extending in a circumferential direction of the accommodation portion (12a),
wherein the battery cell (10) is a bidirectional drawing-type battery cell in which the pair of electrode leads (13, 15) are drawn in opposite directions,
wherein the battery cell (10) includes a sensing lead (17) connected to one of the electrode tabs (11a), wherein the sensing lead (17) is located at the sealing portion (12b) at one side or the other side of the battery cell (10), and
**characterized in that** the sensing lead (17) extends in parallel to any one of the pair of electrode leads (13, 15) adjacent thereto, wherein the sensing lead (17) is located to be adjacent to any one of the pair of electrode leads (13, 15) having opposite polarity than the sensing lead (17), and
wherein the sensing lead (17) does not extend to the outside of the pouch case (12) but is located at the inside thereof, and is exposed to the outside through a sensing hole (H) formed in the sealing portion (12b) of the pouch case (12), wherein the sensing hole (H) is formed in at least one of upper and lower surfaces of the pouch case (12).

2. The battery cell (10) according to claim 1, wherein in the sealing portion (12b), a region where the sensing lead (17) is located is not sealed.

3. The battery cell (10) according to claim 2,
wherein a sealing width (d) of the region where the sensing lead (17) is located is smaller than an entire width (D) of the sealing portion (12b), wherein the sealing width (d) is preferably 1/4 or above the entire width (D) of the sealing portion (12b).

4. A battery module, comprising:
the battery cell (10) according to any one of claims 1 to 3;
a voltage sensor (20) configured to sense a voltage of the battery cell (10); and
a sensing wire (30) configured to connect the battery cell (10) and the voltage sensor (20).

5. The battery module according to claim 4, when comprising the battery cell (10) according to claim 3,
wherein the sensing wire (30) connects the sensing lead (17) to the voltage sensor (20) and also connects the electrode lead (13) adjacent to the sensing lead (17) to the voltage sensor (20).

6. The battery module according to claim 4,
wherein the sensing hole (H) is formed in the upper or lower surface of the pouch case (12).

7. The battery module according to claim 6,
wherein the sensing wire (30) is connected to the sensing lead (17) by a solder.

8. The battery module according to claim 4,
wherein the sensing hole (H) is formed in both of the upper and lower surfaces of the pouch case (12).

9. The battery module according to claim 8,
wherein a receptacle (31) is connected to an end of the sensing wire (30), and
wherein the receptacle (31) is in contact with and elastically presses both surfaces of the sensing lead (17).

## Patentansprüche

1. Batteriezelle (10), umfassend:
eine Elektrodenanordnung (11), die ein Elektrodenstegpaar (11a) aufweist;
ein Elektrodenleitungspaar (13, 15), das mit den Elektrodenstegen (11a) verbunden ist; und
ein Tragegehäuse (12), das so konfiguriert ist, dass es die Elektrodenanordnung (11) aufnimmt,
wobei das Tragegehäuse (12) in einem Zustand abgedichtet ist, in dem die Elektrodenleitungen (13, 15) an der Außenseite des Tragegehäuses (12) offenliegen,
wobei das Tragegehäuse (12) einen Aufnahmeabschnitt (12a) zum Aufnehmen der Elektrodenanordnung (11) und einen Dichtungsabschnitt (12), der sich in einer Umfangsrichtung des Aufnahmeabschnitts (12a) erstreckt, umfasst,
wobei die Batteriezelle (10) eine Batteriezelle vom Typ zum bidirektionalen Ziehen ist, in der das Elektrodenleitungspaar (13, 15) in entgegengesetzte Richtungen gezogen wird,
wobei die Batteriezelle (10) einen Sensorleiter (17) einschließt, der mit einem der Elektrodenstege (11a) verbunden ist, wobei der Sensorleiter (17) an dem Dichtungsabschnitt (12b) an einer Seite oder der anderen Seite der Batteriezelle (10) gelegen ist, und
**dadurch gekennzeichnet, dass** sich der Sensorleiter (17) parallel zu einem Elektrodenleitungspaar (13, 15) angrenzend dazu erstreckt, wobei der Sensorleiter (17) so gelegen ist, dass er angrenzend zu einem Elektrodenleitungspaar (13, 15) gelegen ist, das dem Sensorleiter (17) entgegengesetzte Polarität aufweist, und
wobei sich der Sensorleiter (17) nicht zur Außenseite des Tragegehäuses (12) erstreckt, sondern im Inneren davon gelegen ist und durch eine Sensoröffnung(H), die im Dichtungsabschnitt (12b) des Tragegehäuses (12) gebildet ist, zur Außenseite offenliegt, wobei die Sensoröffnung(H) auf mindestens einem von oberen und unteren Oberflächen des Tragegehäuses (12) gebildet ist.

2. Batteriezelle (10) nach Anspruch 1, wobei im Dichtungsabschnitt (12b) ein Bereich, in dem der Sensorleiter (17) gelegen ist, nicht abgedichtet ist.

3. Batteriezelle (10) nach Anspruch 2,
wobei eine Abdichtungsbreite (d) des Bereichs, in dem der Sensorleiter (17) gelegen ist, kleiner ist als eine Gesamtbreite (D) des Dichtungsabschnitts (12b), wobei die Abdichtungsbreite (d) vorzugsweise 1/4 oder mehr der Gesamtbreite (D) des Dichtungsabschnitts (12b) beträgt.

4. Batteriemodul, umfassend:
die Batteriezelle (10) nach einem der Ansprüche 1 bis 3;
einen Spannungssensor (20), der so konfiguriert ist, dass er eine Spannung der Batteriezelle (10) erfasst; und
einen Sensordraht (30), der so konfiguriert ist, dass er die Batteriezelle (10) und den Spannungssensor (20) verbindet.

5. Batteriemodul nach Anspruch 4, wenn es die Batteriezelle (10) nach Anspruch 3 umfasst,
wobei der Sensordraht (30) den Sensorleiter (17) mit dem Spannungssensor (20) verbindet und auch die Elektrodenleitung (13) angrenzend zum Sensorleiter (17) mit dem Spannungssensor (20) verbindet.

6. Batteriemodul nach Anspruch 4,
wobei die Sensoröffnung (H) in der oberen oder unteren Oberfläche des Tragegehäuses (12) gebildet ist.

7. Batteriemodul nach Anspruch 6,
wobei der Sensordraht (30) mit dem Sensorleiter (17) durch ein Lot verbunden ist.

8. Batteriemodul nach Anspruch 4,
wobei die Sensoröffnung (H) sowohl in der oberen als auch in der unteren Oberfläche des Tragegehäuses (12) gebildet ist.

9. Batteriemodul nach Anspruch 8,
wobei ein Aufnahmefach (31) mit einem Ende des Sensordrahts (30) verbunden ist, und
wobei das Aufnahmefach (31) mit beiden Oberflächen des Sensorleiters (17) in Berührung steht und elastisch darauf drückt.

## Revendications

1. Élément de batterie (10), comprenant :
un ensemble d'électrodes (11) présentant une paire de languettes d'électrode (11a) ;
une paire de conducteurs d'électrode (13, 15) raccordés aux languettes d'électrode (11a) ; et
un boîtier poche (12) configuré pour recevoir l'ensemble d'électrodes (11),
dans lequel le boîtier poche (12) est scellé dans un état où les conducteurs d'électrode (13, 15) sont exposés vers l'extérieur du boîtier poche (12),
dans lequel le boîtier poche (12) comprend une partie de réception (12a) permettant de recevoir l'ensemble d'électrodes (11) et une partie de scellement (12) s'étendant dans une direction circonférentielle de la partie de réception (12a),
dans lequel l'élément de batterie (10) est un élément de batterie de type à tirage bidirectionnel dans lequel la paire de conducteurs d'électrode (13, 15) sont tirés dans des directions opposées,
dans lequel l'élément de batterie (10) inclut un conducteur de détection (17) raccordé à l'une des languettes d'électrode (11a), dans lequel le conducteur de détection (17) est situé au niveau de la partie de scellement (12b) sur un côté ou l'autre côté de l'élément de batterie (10), et
**caractérisé en ce que** le conducteur de détection (17) s'étend en parallèle à l'un quelconque de la paire de conducteurs d'électrode (13, 15) adjacent à celui-ci, dans lequel le conducteur de détection (17) est situé de manière à être adjacent à l'un quelconque de la paire de conducteurs d'électrode (13, 15) présentant une polarité opposée au conducteur de détection (17), et
dans lequel le conducteur de détection (17) ne s'étend pas vers l'extérieur du boîtier poche (12) mais est situé à l'intérieur de celui-ci, et est exposé vers l'extérieur à travers un trou de détection (H) formé dans la partie de scellement (12b) du boîtier poche (12), dans lequel le trou de détection (H) est formé dans au moins une des surfaces supérieure et inférieure du boîtier poche (12).

2. Élément de batterie (10) selon la revendication 1, dans lequel, dans la partie de scellement (12b), une région où le conducteur de détection (17) est situé n'est pas scellée.

3. Élément de batterie (10) selon la revendication 2,
dans lequel une largeur de scellement (d) de la région où le conducteur de détection (17) est situé est inférieure à une largeur entière (D) de la partie de scellement (12b), dans lequel la largeur de scellement (d) est de préférence 1/4 ou plus de la largeur entière (D) de la partie de scellement (12b).

4. Module de batterie, comprenant :
l'élément de batterie (10) selon l'une quelconque des revendications 1 à 3 ;
un détecteur de tension (20) configuré pour détecter une tension de l'élément de batterie (10) ; et
un fil de détection (30) configuré pour raccorder l'élément de batterie (10) et le détecteur de tension (20).

5. Module de batterie selon la revendication 4, lorsque comprenant l'élément de batterie (10) selon la revendication 3,
dans lequel le fil de détection (30) raccorde le conducteur de détection (17) au détecteur de tension (20) et raccorde également le conducteur d'électrode (13) adjacent au conducteur de détection (17) au détecteur de tension (20).

6. Module de batterie selon la revendication 4,
dans lequel le trou de détection (H) est formé dans la surface supérieure ou inférieure du boîtier poche (12).

7. Module de batterie selon la revendication 6,
dans lequel le fil de détection (30) est raccordé au conducteur de détection (17) par une brasure.

8. Module de batterie selon la revendication 4,
dans lequel le trou de détection (H) est formé dans à la fois les surfaces supérieure et inférieure du boîtier poche (12).

9. Module de batterie selon la revendication 8,
dans lequel un réceptacle (31) est raccordé à une extrémité du fil de détection (30), et
dans lequel le réceptacle (31) est en contact avec et presse élastiquement les deux surfaces du conducteur de détection (17).
